# EUROPEAN PATENT APPLICATION

(11) **EP 3 370 054 A1**
(43) Date of publication of application: **05.09.2018**
(21) Application number: 18159307.0
(22) Date of filing: 28.02.2018
(51) Int. Cl.: G01M 17/00

(54) **APPARATUS AND METHOD FOR AUTOMATICALLY INSPECTING AND AUTOMATICALLY CORRECTING BICYCLE FRAME**

(30) Priority: 03.03.2017 TW 106106949
(71) Applicant: CENZ Automation Co. Ltd., Taipei City 110, Taiwan (R.O.C.) (TW)
(72) Inventor: LIN, Chyi-Yeu, Taipei City 111, (TW); TECHANE, Asheber Wagshum, No.17, (TW); CHEN, Yu-Chang, New Taipei City 234, (TW); YEN, Shih-Hsiang, Taichung City 436, (TW)
(74) Representative: Haseltine Lake LLP

(57) **Abstract**

An apparatus for automatically inspecting and automatically correcting a bicycle includes a base, a fixing device, a first coupling device, a first inspecting device and a first correcting device. The fixing device is disposed at the base and fixes an end portion of the bicycle frame to the base. The first coupling device is disposed at the base and automatically coupled to a first tube portion of the bicycle frame, thereby positioning the first tube portion at a predetermined position. The first inspecting device is disposed at the base and automatically inspects whether the first tube portion has deflections along first and second directions relative to the end portion. The first correcting device is disposed at the base and automatically applies a force to the first tube portion, thereby adjusting the first tube portion to have no deflection along the first and second directions relative to the end portion.

## Description

### BACKGROUND

### Field of the Invention

The invention relates to an apparatus and a method for inspecting and correcting a bicycle frame and more particularly, to an apparatus and a method for automatically inspecting and automatically correcting a bicycle frame.

### Description of Related Art

Along with fast progress and development of technologies, material culture and life quality are continuously improved, and sports and leisure activities become fashionable. Among them, the bicycle exercise becomes more and more popular. In order to ensure that geometric settings of a bicycle frame conform to expectations, a deflection of the bicycle frame has to be inspected during a bicycle manufacturing process, thereby correcting the deflection of the bicycle frame. However, in the current bicycle manufacturing process, both the aforementioned inspection and correction of the bicycle frame are performed manually by the manpower, which consumes much manpower and time, while accuracy in the inspection and the correction may be likely dropped due to human factors.

### SUMMARY

The invention provides an apparatus and a method for automatically inspecting and automatically correcting a bicycle frame capable of automatically inspecting and automatically correcting a deflection of the bicycle frame.

An apparatus for automatically inspecting and automatically correcting a bicycle frame is provided by the invention. The apparatus includes a base, a fixing device, a first coupling device, a first inspecting device and a first correcting device. The fixing device is disposed at the base and adapted to fix an end portion of the bicycle frame to the base. The first coupling device is disposed at the base and adapted to be automatically coupled to a first tube portion of the bicycle frame, thereby positioning the first tube portion at a predetermined position. The first inspecting device is disposed at the base and adapted to automatically inspect whether the first tube portion has deflections along a first direction and a second direction relative to the end portion. The first correcting device is disposed at the base and adapted to automatically apply a force to the first tube portion, thereby adjusting the first tube portion to have no deflection along the first direction and the second direction relative to the end portion.

In an embodiment of the invention, the first coupling device has a first movable fixing mechanism and is adapted to be fixed to different positions on the base by the first movable fixing mechanism, so as to be applied to the first tube portion in different sizes and at different positions.

In an embodiment of the invention, the first coupling device includes a first coupling member and a first driving unit, and the first driving unit is adapted to drive the first coupling member to move linearly to be coupled to the first tube portion.

In an embodiment of the invention, the first inspecting device includes a camera, a grating or a laser range finder.

In an embodiment of the invention, the first correcting device includes at least one second driving unit and a first holding member, the first holding member is adapted to hold the first tube portion, and the at least one second driving unit is adapted to drive the first holding member to apply a force to the first tube portion.

In an embodiment of the invention, the apparatus for automatically inspecting and automatically correcting the bicycle frame further includes a second coupling device, a second inspecting device and a second correcting device. The second coupling device is disposed at the base and adapted to be automatically coupled to a second tube portion of the bicycle frame, thereby positioning the second tube portion at another predetermined position. The second inspecting device is disposed at the base and adapted to automatically inspect whether the second tube portion has a deflection along the first direction relative to the first tube portion. The second correcting device is disposed at the base and adapted to automatically apply a force to the second tube portion, thereby adjusting the second tube portion to have no deflection along the first direction relative to the first tube portion.

In an embodiment of the invention, the second coupling device has a second movable fixing mechanism and is adapted to be fixed to different positions on the base by the second movable fixing mechanism, so as to be applied to the second tube portion in different sizes and at different positions.

In an embodiment of the invention, the second coupling device includes at least one second coupling member and at least one third driving unit, and the at least one third driving unit is adapted to drive the at least one second coupling member to move linearly to be coupled to the second tube portion.

In an embodiment of the invention, the second inspecting device includes a camera, a grating or a laser range finder.

In an embodiment of the invention, the second correcting device includes at least one fourth driving unit and at least one second holding member, the at least one second holding member is adapted to hold the second tube portion, and the at least one fourth driving unit is adapted to drive the at least one second holding member to apply a force to the second tube portion.

In an embodiment of the invention, the end portion is a five-way tube, the first tube portion is a seat tube of the bicycle frame, and the second tube portion is a head tube of the bicycle frame.

A method for automatically inspecting and automatically correcting a bicycle frame is provided by the invention. An end portion of the bicycle frame is placed on a fixing device. A first coupling device is driven to be automatically coupled to a first tube portion of the bicycle frame, thereby positioning the first tube portion at a predetermined position. Whether the first tube portion has deflections along a first direction and a second direction relative to the end portion is automatically inspected by a first inspecting device, so as to obtain an inspection value. Whether the inspection value obtained by the first inspecting device meets a predetermined value is determined. If the inspection value obtained by the first inspecting device does not meet the predetermined value, a first correcting device is driven to automatically apply a force to the first tube portion, thereby adjusting the inspection value of the first tube portion relative to the end portion to the predetermined value.

In an embodiment of the invention, the method for automatically inspecting and automatically correcting a bicycle frame further includes the following step. The first coupling device is fixed to different positions relative to the first tube portion by a first movable fixing mechanism, so as to be applied to the first tube portion in different sizes and at different positions.

In an embodiment of the invention, the step of driving the first coupling device to be automatically coupled to the first tube portion of the bicycle frame includes the following step. The first coupling member is driven to move linearly to be coupled to the first tube portion by a first driving unit.

In an embodiment of the invention, the method for automatically inspecting and automatically correcting a bicycle frame further includes the following step. After the first tube portion is positioned at the predetermined position, and before the first tube portion is automatically inspected by the first inspecting device, the end portion is fixed by the fixing device, and the first coupling device is driven to automatically release the first tube portion.

In an embodiment of the invention, the step of driving the first correcting device to automatically apply the force to the first tube portion includes the following step. The first tube portion is held by a first holding member, and the first holding member is driven to apply the force to the first tube portion by at least one second driving unit.

In an embodiment of the invention, the step of driving the first correcting device to automatically apply the force to the first tube portion includes the following step. The force applied to the first tube portion by the first correcting device is adjusted according to first correction historical information stored in a database.

In an embodiment of the invention, a step of establishing the first correction historical information includes the following step. A plurality of forces applied to the first tube portion by the first correcting device and a plurality of corresponding correction results are stored in the database.

In an embodiment of the invention, the method for automatically inspecting and automatically correcting a bicycle frame further includes the following step. A second coupling device is driven to be automatically coupled to a second tube portion of the bicycle frame, thereby positioning the second tube portion at another predetermined position. Whether the second tube portion has a deflection along the first direction relative to the first tube portion is automatically inspected by a second inspecting device, so as to obtain another inspection value. Whether the inspection value obtained by the second inspecting device meets the predetermined value is determined. If the inspection value obtained by the second inspecting device does not meet the predetermined value, a second correcting device is driven to automatically apply a force to the second tube portion, thereby adjusting the inspection value of the second tube portion relative to the first tube portion to the predetermined value.

In an embodiment of the invention, the method for automatically inspecting and automatically correcting a bicycle frame further includes the following step. The second coupling device is fixed to different positions relative to the second tube portion by a second movable fixing mechanism, so as to be applied to the second tube portion in different sizes and at different positions.

In an embodiment of the invention, the step of driving the second coupling device to be automatically coupled to the second tube portion of the bicycle frame includes the following step. At least one second coupling member is driven to move linearly to be coupled to the second tube portion by at least one third driving unit.

In an embodiment of the invention, the method for automatically inspecting and automatically correcting a bicycle frame further includes the following step. Before the second tube portion is inspected by the second inspecting device, the second coupling device is driven to automatically release the at least one second coupling member.

In an embodiment of the invention, the step of inspecting the second tube portion by the second correcting device includes the following step. Whether the at least one second coupling member coupled to the second tube portion has the deflection along the first direction relative to the first tube portion is automatically inspected by the second inspecting device, thereby obtaining the inspection value of the second tube portion relative to the first tube portion.

In an embodiment of the invention, the step of driving the second correcting device to automatically apply the force to the second tube portion includes the following step. The second correcting device is driven to automatically apply the force to the at least one second coupling member coupled to the second tube portion, thereby applying the force to the second tube portion through the at least one second coupling member.

In an embodiment of the invention, the step of driving the second correcting device to automatically apply the force to the second tube portion includes the following step. The second tube portion is held by at least one second holding member, and the at least one second holding member is driven to apply the force to the second tube portion by at least one fourth driving unit.

In an embodiment of the invention, the step of driving the second correcting device to automatically apply the force to the second tube portion includes the following step. The force applied to the second tube portion by the second correcting device is adjusted according to second correction historical information stored in a database.

In an embodiment of the invention, a step of establishing the second correction historical information includes the following step. A plurality of forces applied to the second tube portion by the second correcting device and a plurality of corresponding correction results are stored in the database.

In an embodiment of the invention, the end portion is a five-way tube, the first tube portion is a seat tube of the bicycle frame, and the second tube portion is a head tube of the bicycle frame.

To sum up, in the apparatus for automatically inspecting and automatically correcting the bicycle frame provided by the invention, the coupling devices, the inspecting devices and the correcting devices are all automated devices and can automatically inspect the deflection of the bicycle frame and automatically correct the deflection of the bicycle frame according to the inspection results. Accordingly, the manpower and the labor hours for inspecting and correcting the bicycle frame can be saved, and the accuracy in the inspection and the correction can be enhanced.

To make the above features and advantages of the invention more comprehensible, embodiments accompanied with drawings are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a three dimensional (3D) view of an automatically inspecting and automatically correcting apparatus for a bicycle frame according to an embodiment of the invention.
FIG. 2 is a top view of the automatically inspecting and automatically correcting apparatus for the bicycle frame depicted in FIG. 1.
FIG. 3 is a side view of the automatically inspecting and automatically correcting apparatus for the bicycle frame depicted in FIG. 1.
FIG. 4 is flowchart of a method for automatically inspecting and automatically correcting the bicycle frame according to an embodiment of the invention.
FIG. 5 is a block view of a part of the components of the the automatically inspecting and automatically correcting apparatus for the bicycle frame depicted in FIG. 1.
FIG. 6 is a partial 3D view of the automatically inspecting and automatically correcting apparatus for the bicycle frame depicted in FIG. 1.
FIG. 7 is a block view of a part of the components of the the automatically inspecting and automatically correcting apparatus for the bicycle frame depicted in FIG. 6.
FIG. 8 is a partial side view of the automatically inspecting and automatically correcting apparatus for a bicycle frame depicted in FIG. 6.
FIG. 9 is a partial side view of the automatically inspecting and automatically correcting apparatus for the bicycle frame depicted in FIG. 1.
FIG. 10 is a 3D view of an automatically inspecting and automatically correcting apparatus for a bicycle frame according to another embodiment of the invention.
FIG. 11 is a 3D view of an automatically inspecting and automatically correcting apparatus for a bicycle frame according to another embodiment of the invention.
FIG. 12 is a 3D view of a part of the components of the the automatically inspecting and automatically correcting apparatus for the bicycle frame depicted in FIG. 11.
FIG. 13 is a partial side view of the automatically inspecting and automatically correcting apparatus for the bicycle frame depicted in FIG. 11.

### DESCRIPTION OF EMBODIMENTS

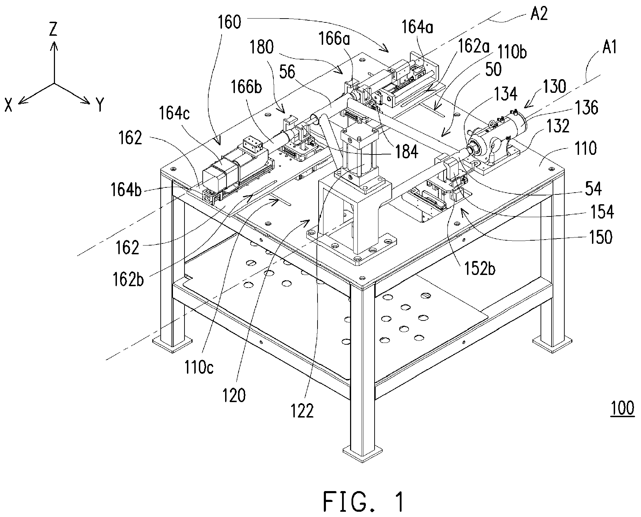

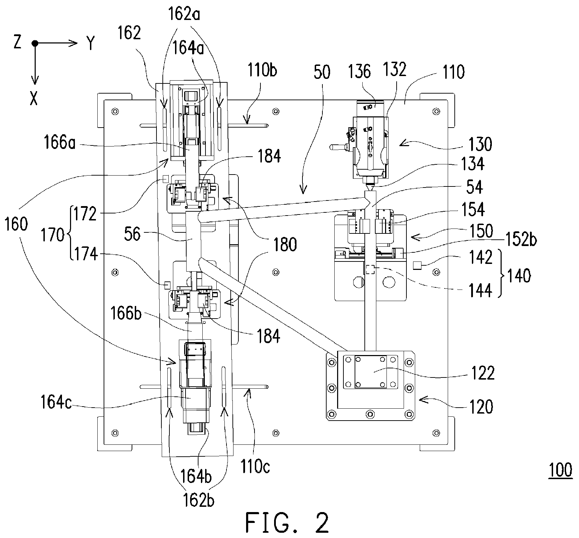

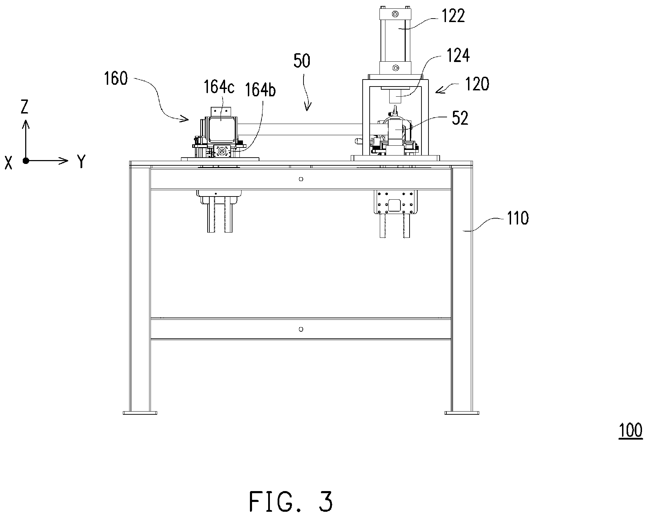

FIG. 1 is a three dimensional (3D) view of an automatically inspecting and automatically correcting apparatus for a bicycle frame according to an embodiment of the invention. FIG. 2 is a top view of the apparatus for automatically inspecting and automatically correcting the bicycle frame depicted in FIG. 1. FIG. 3 is a side view of the automatically inspecting and automatically correcting apparatus for the bicycle frame depicted in FIG. 1. Referring to FIG. 1 through FIG. 3, an automatically inspecting and automatically correcting apparatus 100 for a bicycle frame includes a base 110, a fixing device 120, a first coupling device 130, a first inspecting device 140 (illustrated in FIG. 2) and a first correcting device 150.

The fixing device 120 is disposed at the base 110 and adapted to fix an end portion 52 (illustrated in FIG. 3) of a bicycle frame 50 to the base 110. The first coupling device 130 is disposed at the base 110 and adapted to be automatically coupled to a first tube portion 54 of the bicycle frame 50, thereby positioning the first tube portion 54 at a predetermined position. The first inspecting device 140 is disposed at the base 110 and adapted to automatically inspect whether the first tube portion 54 has deflections along a first direction (illustrated as a Z direction) and a second direction (illustrated as a Y direction) relative to the end portion 52. If the first inspecting device 140 inspects that the first tube portion 54 has the deflections along the first direction and/or the second direction relative to the end portion 52, it represents that the first tube portion 54 deflects from a datum line A1 (illustrated in FIG. 1) parallel to an X direction. The first correcting device 150 is disposed at the base 110 and adapted to automatically apply a force to the first tube portion 54, thereby adjusting the first tube portion 54 to have no deflection along the first direction and the second direction relative to the end portion 52, i.e., adjusting the first tube portion 54 to extend along the datum line A1. In the present embodiment, the end portion 52 is, for example, a five-way tube, and the first tube portion 54 is, for example, a seat tube of the bicycle frame 50.

In addition, the automatically inspecting and automatically correcting apparatus 100 for the bicycle frame further includes a second coupling device 160, a second inspecting device 170 (illustrated in FIG. 2) and a second correcting device 180. The second coupling device 160 is disposed at the base 110 and adapted to be automatically coupled to a second tube portion 56 of the bicycle frame 50, thereby positioning the second tube portion 56 at another predetermined position. The second inspecting device 170 is disposed at the base 110 and adapted to automatically inspect whether the second tube portion 56 has a deflection along the first direction (illustrated as the Z direction) relative to the first tube portion 54. If the first inspecting device 140 inspects that the second tube portion 56 has the deflections along the first direction relative to the first tube portion 54, it represents that the second tube portion 56 deflects from another datum line A2 (illustrated in FIG. 1) parallel to the X direction. The second correcting device 180 is disposed at the base 110 and adapted to automatically apply a force to the second tube portion 56, thereby adjusting the second tube portion 56 to have no deflection along the first direction relative to the first tube portion 54, i.e., adjusting the second tube portion 56 to extend along the aforementioned datum line A2. In the present embodiment, the second tube portion 56 is, for example, a head tube of the bicycle frame 50.

In the aforementioned disposition manner, the first coupling device 130, the first inspecting device 140, the first correcting device 150, the second coupling device 160, the second inspecting device 170 and the second correcting device 180 are all automated devices and can automatically inspect the deflection of the bicycle frame 50 and automatically correct the deflection of the bicycle frame 50 according to the inspection results. In this way, the manpower and labor hours for inspecting and correcting the bicycle frame 50 can be saved, and an accuracy in the inspection and the correction can be enhanced.

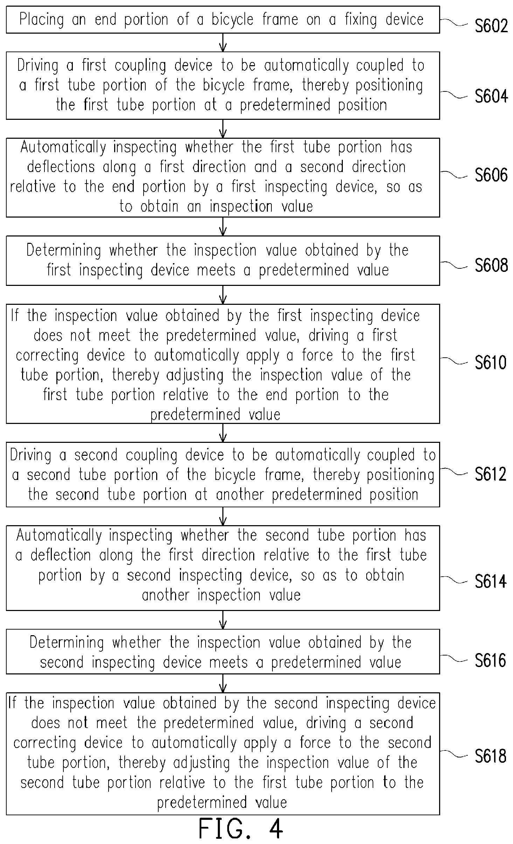

A method for automatically inspecting and automatically correcting the bicycle frame of the present embodiment will be described below with reference to a flowchart. FIG. 4 is flowchart of a method for automatically inspecting and automatically correcting the bicycle frame according to an embodiment of the invention. Referring to FIG. 4, first, an end portion 52 of a bicycle frame 50 is placed on a fixing device 120 (step S602). Then, a first coupling device 130 is driven to be automatically coupled to a first tube portion 54 of the bicycle frame 50, thereby positioning the first tube portion 54 at a predetermined position (step S604). Whether the first tube portion 54 has deflections along a first direction and a second direction relative to the end portion 52 is automatically inspected by a first inspecting device 140, so as to obtain an inspection value (step S606). Whether the inspection value obtained by the first inspecting device 140 meets a predetermined value is determined (step S608). If the inspection value obtained by the first inspecting device 140 does not meet the predetermined value, a first correcting device 150 is driven to automatically apply a force to the first tube portion 54, thereby adjusting the inspection value of the first tube portion 54 relative to the end portion 52 to the predetermined value (step S610).

After step S610 is performed, the following steps may be further performed. A second coupling device 160 is driven to be automatically coupled to a second tube portion 56 of the bicycle frame 50, thereby positioning the second tube portion 56 at another predetermined position (step S612). Whether the second tube portion 56 has a deflection along the first direction relative to the first tube portion 54 is automatically inspected by a second inspecting device 170, so as to obtain another inspection value (step S614). Whether the inspection value obtained by the second inspecting device 170 meets the predetermined value is determined (step S616). If the inspection value obtained by the second inspecting device 170 does not meet the predetermined value, a second correcting device 180 is driven to automatically apply a force to the second tube portion 56, thereby adjusting the inspection value of the second tube portion 56 relative to the first tube portion 54 to the predetermined value (step S618).

It should be noted that after the first tube portion 54 is positioned at the predetermined position in step S604, and before the first tube portion 540 is automatically inspected by the first inspecting device 140 in step S606, the end portion 52 is fixed by the fixing device 120, and the first coupling device 130 is driven to automatically release the first tube portion 54. In this way, the end portion 52 is fixed in a condition that the first tube portion 54 is located at the predetermined position and may be employed as a datum point for correction, such that the first tube portion 54 after being released may be inspected and corrected by employing the end portion 52 as the datum point.

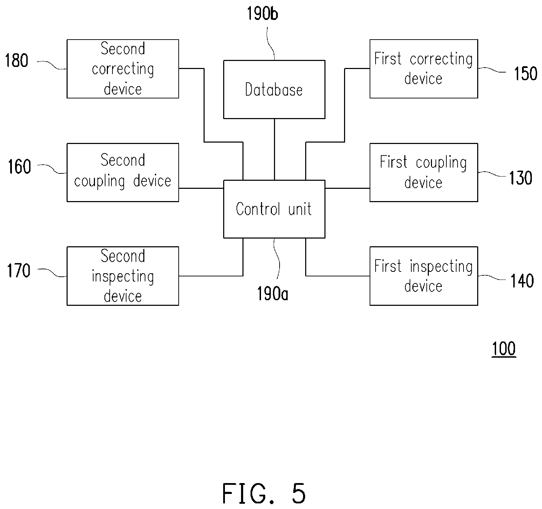

FIG. 5 is a block view of a part of the components of the automatically inspecting and automatically correcting apparatus 100 for the bicycle frame depicted in FIG. 1. The automatically inspecting and automatically correcting apparatus 100 for the bicycle frame of the present embodiment further includes a control unit 190a and database 190b. The control unit 190a is, for example, a computer device configured to control the automatic inspection and automatic correction (which are illustrated in FIG. 4) performed on the bicycle frame 50 by the first coupling device 130, the first inspecting device 140, the first correcting device 150, the second coupling device 160, the second inspecting device 170 and the second correcting device 180. The control unit 190a may control the operations of the first correcting device 150 and the second correcting device 180 according to information stored in the database 190b.

To be detailed, a plurality of forces applied to the first tube portion 54 of different materials, different sizes and different shapes by the first correcting device 150 and a plurality of corresponding correction results may be stored in the database 190b, thereby establishing first correction historical information, and a plurality of forces applied to the second tube portion 56 of different materials, different sizes and different shapes by the second correcting device 180 and a plurality of corresponding correction results may be stored in the database 190b, thereby establishing second correction historical information. Accordingly, the control unit 190a may adjust the force applied to the first tube portion 54 by the first correcting device 150 according to the first correction historical information stored in the database 190b and may adjust the force applied to the second tube portion 56 by the second correcting device 180 according to the second correction historical information stored in the database 190b, so as to continuously enhance the accuracy of the correction.

Specific disposition and operation manners of the fixing device 120, the first coupling device 130, the first inspecting device 140 and the first correcting device 150 of the present embodiment will be described in detail below.

The fixing device 120 of the present embodiment includes a driving source 122 and a fixing member 124, as illustrated in FIG. 3. The driving source 122 is configured to drive the fixing member 124 to move downward to be engaged with the end portion 52 of the bicycle frame 50, so as to fix the end portion 52 by the fixing member 124. The driving source 122 may be an electric cylinder, a pneumatic cylinder, a hydraulic cylinder or any other suitable driving source (e.g., a motor), which is not limited in the invention.

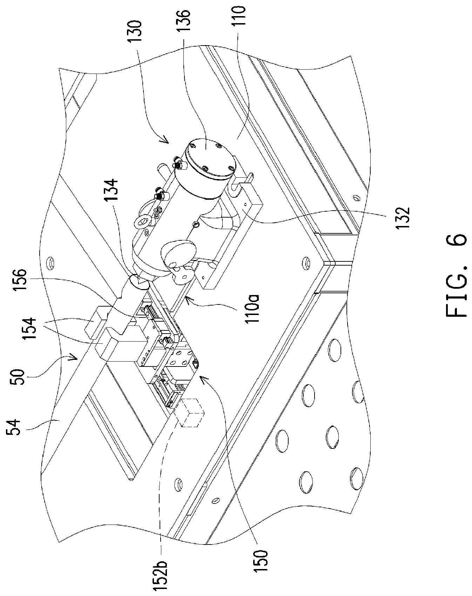

FIG. 6 is a partial 3D view of the automatically inspecting and automatically correcting apparatus for the bicycle frame depicted in FIG. 1. Referring to FIG. 6, the first coupling device 130 of the present embodiment has a first movable fixing mechanism 132, and the base 110 correspondingly has an opening slot 110a linearly extending along the X direction (which is labeled in FIG. 1 through FIG. 3). A user may fix the first coupling device 130 to different positions of the opening slot 110a of the base 110 (or may be considered as fixing the first coupling device 130 to different positions relative to the first tube portion 54) by the first movable fixing mechanism 132, thereby applying the first coupling device 130 to the first tube portion 54 with different lengths starting from the end portion 52. For example, a fastening member passing through the opening slot 110a from the bottom of the base 110 is fastened to the first movable fixing mechanism 132, thereby fixing the first coupling device 130. The first movable fixing mechanism 132 of the present embodiment may be, for example, manually adjusted by the user, but the invention is not limited thereto. In other embodiments, the first movable fixing mechanism 132 may also be automatically driven to move to a desired position according to difference lengths of the first tube portion 54 by means of electrically driving. In addition, the first coupling device 130 includes a first coupling member 134 and a first driving unit 136. The first driving unit 136 is, for example, an electric cylinder, a pneumatic cylinder, a hydraulic cylinder or any other suitable driving source (e.g., a motor) and is adapted to drive the first coupling member 134 to move linearly along the X direction (which is labeled in FIG. 1 through FIG. 3) to be coupled to the first tube portion 54 by being inserted into the first tube portion 54.

In the present embodiment, the first inspecting device 140 includes two sensors 142 and 144 as illustrated in FIG. 2. The sensor 142 is, for example, a camera, a grating or a laser range finder and is disposed at a side of the first tube portion 54 to automatically sense whether the first tube portion 54 has the deflection along the first direction (which is illustrated as the Z direction) relative to the end portion 52. The sensor 144 is, for example, a camera, a grating or a laser range finder and is disposed in the periphery of the first tube portion 54 (which is illustrated as being disposed below the first tube portion 54) to automatically sense whether the first tube portion 54 has the deflection along the second direction (which is illustrated as the Y direction) relative to the end portion 52. In other embodiments, the sensor 144 may also be disposed above the first tube portion 54. However, the bicycle frame 50, when being placed on the base 110 and when being removed from the base 110, has to be provided with an automatic dodging function.

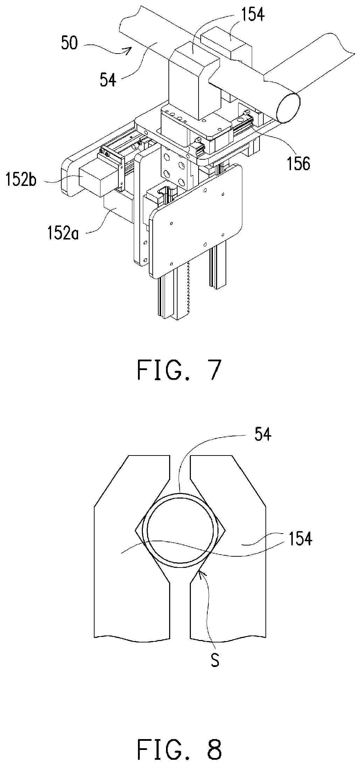

FIG. 7 is a 3D view of a part of the components of the automatically inspecting and automatically correcting apparatus for the bicycle frame depicted in FIG. 6. Referring to FIG. 6 and FIG. 7, the first correcting device 150 of the present embodiment includes two second driving units 152a and 152b and a first holding member 154. The first holding member 154 is, for example, a gripper jaw and adapted to hold the first tube portion 54. The first holding member 154 is driven to perform the gripping and the releasing operations by, for example, a driving source 156. The driving source 156 is, for example, an electric cylinder, a pneumatic cylinder, a hydraulic cylinder or any other suitable driving unit (e.g., a motor). The second driving unit 152a is, for example, a motor or any other suitable driving unit (e.g., an electric cylinder, a pneumatic cylinder or a hydraulic cylinder) and adapted to drive the first holding member 154 to apply a force to the first tube portion 54 along the Z direction as illustrated in FIG. 1 through FIG. 3, thereby adjusting the first tube portion 54 to have no deflection along the Z direction relative to the end portion 52. The second driving unit 152b is, for example, a motor, or any other suitable driving unit (e.g., an electric cylinder, a pneumatic cylinder or a hydraulic cylinder) and adapted to drive the first holding member 154 to apply a force to the first tube portion 54 along the Y direction as illustrated in FIG. 1 through FIG. 3, thereby adjusting the first tube portion 54 to have no deflection along the Y direction relative to the end portion 52. In the present embodiment, the second driving units 152a and 152b drive the first holding member 154 to actuate by gear racks or any other suitable linking mechanisms, for example, which are not limited in the invention.

FIG. 8 is a partial side view of the automatically inspecting and automatically correcting apparatus for a bicycle frame depicted in FIG. 6. The first holding member 154 of the automatically inspecting and automatically correcting apparatus 100 of the present embodiment further includes a positioning slot S, as illustrated in FIG. 6 through FIG. 8 and, with two bevels on two sides of the positioning slot S, is adapted to be held at a predetermined position that is capable of accurately aligning to the first coupling device 130.

Specific disposition and operation manners of the second coupling device 160, the second inspecting device 170 and the second correcting device 180 of the present embodiment will be described in detail below.

Referring to FIG. 2, the second coupling device 160 of the present embodiment has a second movable fixing mechanism 162. The second movable fixing mechanism 162 is, for example, a carrier plate and has two opening slots 162a and two opening slots 162b, and the base 110 correspondingly has two opening slots 110b and 110c linearly extending along the Y direction. The user may fix two ends of the second coupling device 160 to different positions of the opening slots 110b and 110c of the base 110 (or may be considered as fixing the two ends of the second coupling device 160 relative to the second tube portion 56) by the second movable fixing mechanism 162, so as to apply the second coupling device 160 to the second tube portion 56 in different sizes and at different positions. For example, a fastening member passing through the opening slot 110b from the bottom of the base 110 may be fastened to the opening slot 162a of the first movable fixing mechanism 132, and a fastening member passing through the opening slot 110c from the bottom of the base 110 may be fastened to the opening slot 162b of the first movable fixing mechanism 132, thereby fixing the second coupling device 160. As the opening slots 110b, 110c, 162a and 162b are all long-shaped slots, the second movable fixing mechanism 162 has a sufficient degree of freedom for translation and rotation on the XY plane, so as to be applied to the second tube portion 56 in various designs. The second movable fixing mechanism 162 of the present embodiment may be, for example, manually adjusted by the user, but the invention is not limited thereto. In other embodiments, the second movable fixing mechanism 162 may also be automatically driven to actuate by means of electrically driving.

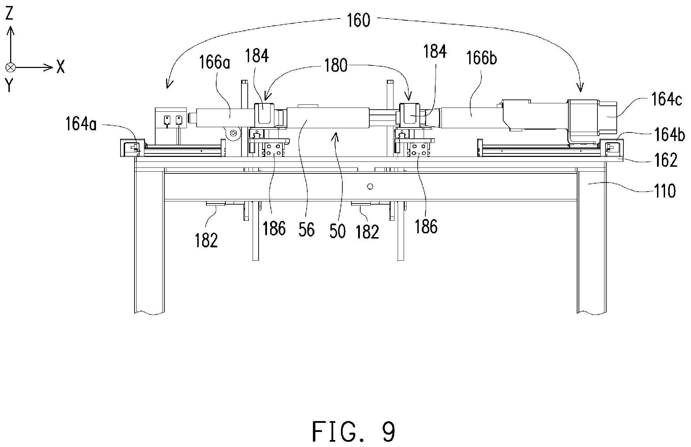

FIG. 9 is a partial side view of the automatically inspecting and automatically correcting apparatus for the bicycle frame depicted in FIG. 1. Referring to FIG. 2 and FIG. 9, the second coupling device 160 of the present embodiment includes two second coupling members 166a and 166b and two third driving units 164a and 164b. The two third driving units 164a and 164b are, for example, motors or other suitable driving units (e.g., electric cylinders, pneumatic cylinders or hydraulic cylinders) and are adapted to respectively drive the two second coupling members 166a and 166b to move linearly along the X direction to be inserted into the two ends of the second tube portion 56, so as to be coupled to the second tube portion 56. Furthermore, the second coupling device 160 further includes another third driving unit 164c. The third driving unit 164c is employed to drive the second coupling member 166b to rotate, such that the second coupling members 166a and 166b are respectively inserted into the two ends of the second tube portion 56 and then screwed with each other. Therein, the second coupling member 166a has, for example, an internal thread, and the second coupling member 166b has, for example, an external thread, so as to be screwed with each other.

Before the second tube portion 56 is automatically inspected by the second inspecting device 170, the second coupling device 160 is first driven to automatically release the two second coupling members 166a and 166b, and in this circumstance, the second coupling members 166a and 166b may be considered as extension structures of the second tube portion 56. The two second coupling members 166a and 166b may be, for example, connected and released by the second coupling device 160 with mechanisms, such as sleeves or gripper jaws, which are not limited in the invention.

As described above, the second inspecting device 170 includes two sensors 172 and 174 as illustrated in FIG. 2. The sensor 172 is, for example, a camera, a grating or a laser range finder and is disposed in the periphery of the second coupling member 166a to automatically sense whether the second coupling member 166a coupled to the second tube portion 56 has a deflection along the first direction (which is illustrated as the Z direction) relative to the first tube portion 54, thereby determining whether the second tube portion 56 has the deflection along the first direction relative to the first tube portion 54. The sensor 174 is, for example, a camera, a grating or a laser range finder and is disposed in the periphery of the second coupling member 166b to automatically sense whether the second coupling member 166b coupled to the second tube portion 56 has a deflection along the first direction (which is illustrated as the Z direction) relative to the first tube portion 54, thereby determining whether the second tube portion 56 has the deflection along the first direction relative to the first tube portion 54. In the manner described above that the second coupling members 166a and 166b are employed as the extension structures of the second tube portion 56, the deflection of the second tube portion 56 may be prevented from being difficult to be sensed due to the second tube portion 56 being too short.

Referring to FIG. 9, the second correcting device 180 of the present embodiment includes two fourth driving units 182 and two second holding members 184. The second holding members 184 are, for example, gripper jaws and adapted to respectively hold the two second coupling members 166a and 166b coupled to the second tube portion 56, thereby, holding the second tube portion 56. The second holding members 184 are respectively driven by, for example, two driving sources 186 to perform a gripping and a releasing operations. The driving sources 186 are, for example, electric cylinders, pneumatic cylinders, hydraulic cylinders or other suitable driving units (e.g., motors). The two fourth driving units 182 are, for example, motors or other suitable driving units (e.g., electric cylinders, pneumatic cylinders or hydraulic cylinders) and adapted to respectively drive the two second holding members 184 to automatically apply forces to the two second coupling members 166a and 166b coupled to the second tube portion 56 along the Z direction to apply the required forces separately to the second tube portion 56 by the two second coupling members 166a and 166b, thereby adjusting the second tube portion 56 to have no deflection along the first direction relative to the first tube portion 54. In the present embodiment, the second holding members 184 are, for example, driven to actuate by the fourth driving units 182 with gear racks or other suitable linking mechanisms, which are not limited in the invention.

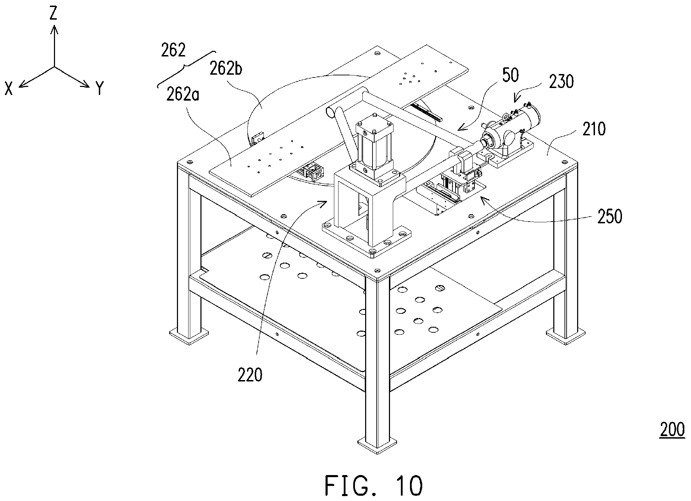

FIG. 10 is a 3D view of an automatically inspecting and automatically correcting apparatus for a bicycle frame according to another embodiment of the invention. In an automatically inspecting and automatically correcting apparatus 200 for a bicycle frame illustrated in FIG. 10, disposition and operation manners of a base 210, a fixing device 220, a first coupling device 230, a first inspecting device 240, a first correcting device 250, a second coupling device, a second movable fixing mechanism 262, a second inspecting device and a second correcting device are similar to those of the base 110, the fixing device 120, the first coupling device 130, the first inspecting device 140, the first correcting device 150, the second coupling device 160, the second movable fixing mechanism 162, the second inspecting device 170 and the second correcting device 180 and thus, will not be repeatedly described. A difference between the automatically inspecting and automatically correcting apparatus 200 for the bicycle frame and the automatically inspecting and automatically correcting apparatus 100 for the bicycle frame lies in the second movable fixing mechanism 262 including a carrier plate 262a and a rotating plate 262b. The rotating plate 262b is rotatably disposed on the base 210 and adapted to be driven to automatically rotate relative to the base 210. The carrier plate 262a is translatably disposed on the rotating plate 262b and adapted to be driven to automatically translate relative to the rotating plate 262b. With the rotation of the rotating plate 262b and the translation of the carrier plate 262a, the second movable fixing mechanism 262 has a sufficient degree of freedom for translation and rotation on the XY plane. It should be mentioned that for clear illustration, the second coupling device, the second inspecting device and the second correcting device on the second movable fixing mechanism 262 are not illustrated in FIG. 10.

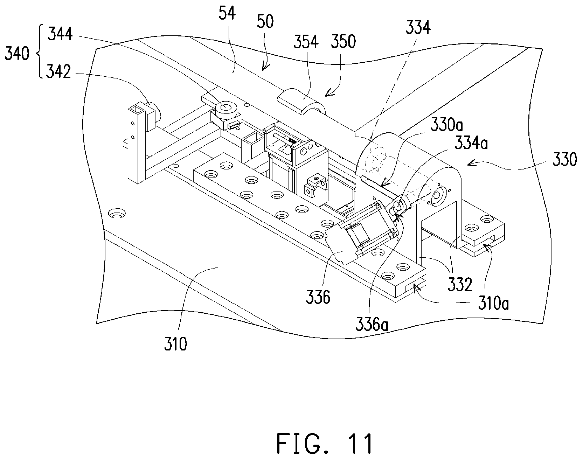

FIG. 11 is a 3D view of an automatically inspecting and automatically correcting apparatus for a bicycle frame according to another embodiment of the invention. In the embodiment illustrated in FIG. 11, disposition and operation manners of a base 310, a first coupling device 330, a first inspecting device 340, a sensor 342, a sensor 344, a first correcting device 350 are similar to those of the base 110, the first coupling device 130, the first inspecting device 140, the sensor 142, the sensor 144, the first correcting device 150 illustrated in FIG. 1, FIG. 2 and FIG. 6 and thus, will not be repeatedly described. A difference between the embodiment illustrated in FIG. 11 and the embodiments illustrated in FIG. 1, FIG. 2 and FIG. 6 lies in a first driving unit 336 having a guiding slot 336a, and a guiding rod 334a of a first coupling member 334 passing through a guiding slot 330a of the first coupling device 330 and passing through the guiding slot 336a of the first driving unit 336. As described above, the driving unit 336 is, for example, a motor and is adapted to drive the guiding slot 336a to rotate, thereby driving the guiding rod 334a to translate along the guiding slot 330a, so as to drive the first coupling member 334 to move linearly to be coupled to the first tube portion 54.

Another difference between the embodiment illustrated in FIG. 11 and the embodiments illustrated in FIG. 1, FIG. 2 and FIG. 6 lies in forms of the first movable fixing mechanisms. Specifically, the base 310 is disposed with two slots 310a as illustrated in FIG. 11, and a first movable fixing mechanism 332 of the first coupling device 330 is movably disposed in the two slots 310a. The user may fix the first coupling device 330 to different positions of the slots 310a of the base 310 by the first movable fixing mechanism 332, so as to apply the first coupling device 330 to the first tube portion 54 in different sizes and at different positions.

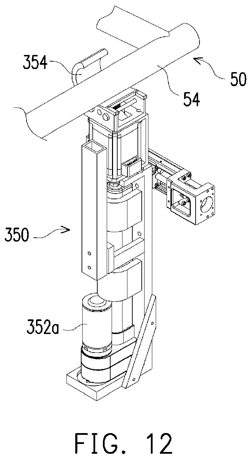

FIG. 12 is a 3D view of a part of the components of the automatically inspecting and automatically correcting apparatus for the bicycle frame depicted in FIG. 11. A difference between the embodiment illustrated in FIG. 12 and the embodiment illustrated in FIG. 7 lies in forms of the first holding members and the second driving units. Specifically, a first holding member 354 illustrated in FIG. 12 (which is also illustrated in FIG. 11) is not a gripper jaw like the first holding member 154 as illustrated in FIG. 7. The first holding member 354 is a clip. In addition, a second driving unit 352a illustrated in FIG. 12 is not a general type motor employed to drive gear racks to actuate like the second driving unit 152a as illustrated in FIG. 7. The second driving unit 352a is a linear motor.

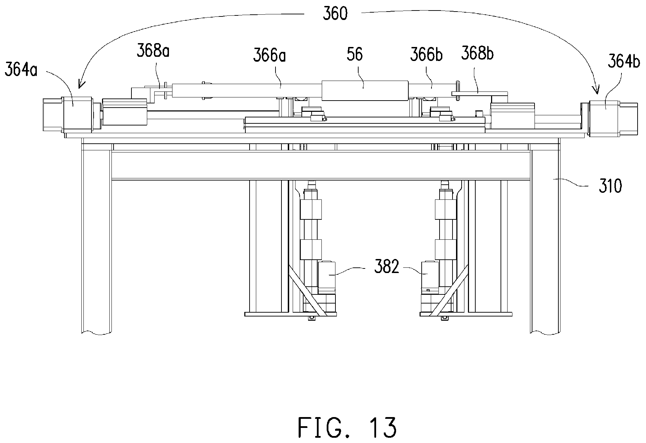

FIG. 13 is a partial side view of the automatically inspecting and automatically correcting apparatus for the bicycle frame depicted in FIG. 11. A disposition and an operation manners of a second coupling device 360 illustrated in FIG. 13 is similar to those of the second coupling device 160 illustrated in FIG. 9 and thus, will not be repeatedly described. A difference between the embodiment illustrated in FIG. 13 and the embodiment illustrated in FIG. 9 lies in the second coupling device 360 respectively gripping and releasing two second coupling members 366a and 366b with two gripper jaws 368a and 368b. The two gripper jaws 368a and 3658b are driven by, for example, an electric cylinder, a pneumatic cylinder, a hydraulic cylinder or any other suitable driving source (e.g., a motor) to grip or release the two second coupling members 366a and 366b. As described above, two third driving units 364a and 364b of the second coupling device 360 are employed to respectively drive the two gripper jaws 368a and 368b to translate, so as to drive the two second coupling members 366a and 366b respectively gripped by the two gripper jaws 368a and 368b to extend into the second tube portion 56. The two second coupling members 366a and 366b are, for example, engaged with each other to be combined with each other in the second tube portion 56, instead of being screwed with each other to be combined with each other in the second tube portion 56 in the way like what the two second coupling members 166a and 166b illustrated in FIG. 9 do. In addition, two fourth driving units 382 illustrated in FIG. 13 are not general type motors used to drive gear racks to actuate like the two fourth driving units 182 illustrated in FIG. 9. The fourth driving units 382 are linear motors.

Based on the above, in the apparatus for automatically inspecting and automatically correcting the bicycle frame provided by the invention, the coupling devices, the inspecting devices and the correcting devices are all automated devices and can automatically inspect the deflection of the bicycle frame and automatically correct the deflection of the bicycle frame according to the inspection results. Accordingly, the manpower and the labor hours for inspecting and correcting the bicycle frame can be saved, and the accuracy in the inspection and the correction can be enhanced. In addition, the positions of the coupling devices can be adjusted by the movable fixing mechanisms, such that the coupling devices can be applied to the bicycle frame in different sizes, and the movable fixing mechanisms can also be automated devices for improving operational convenience of the apparatus for automatically inspecting and automatically correcting the bicycle frame.

## Claims

1. An apparatus (100, 200) for automatically inspecting and automatically correcting a bicycle frame (50), comprising:
a base (110, 210, 310);
a fixing device (120, 220), disposed at the base (110, 210, 310) and adapted to fix an end portion (52) of the bicycle frame (50) to the base (110, 210, 310);
a first coupling device (130, 230, 330), disposed at the base (110, 210, 310) and adapted to be automatically coupled to a first tube portion (54) of the bicycle frame (50), thereby positioning the first tube portion (54) at a predetermined position;
a first inspecting device (140, 340), disposed at the base (110, 210, 310) and adapted to automatically inspect whether the first tube portion (54) has deflections along a first direction and a second direction relative to the end portion (52);
a first correcting device (150, 250, 350), disposed at the base (110, 210, 310) and adapted to automatically apply a force to the first tube portion (54), thereby adjusting the first tube portion (54) to have no deflection along the first direction and the second direction relative to the end portion (52);
a second coupling device (160, 360), disposed at the base (110, 210, 310) and adapted to be automatically coupled to a second tube portion (56) of the bicycle frame (50), thereby positioning the second tube portion (56) at another predetermined position;
a second inspecting device (170), disposed at the base (110, 210, 310) and adapted to automatically inspect whether the second tube portion (56) has a deflection along the first direction relative to the first tube portion (54); and
a second correcting device (180), disposed at the base (110, 210, 310) and adapted to automatically apply a force to the second tube portion (56), thereby adjusting the second tube portion (56) to have no deflection along the first direction relative to the first tube portion (54).

2. The apparatus (100, 200) for automatically inspecting and automatically correcting the bicycle frame (50) according to claim 1, wherein
the first coupling device (130, 230, 330) has a first movable fixing mechanism (132, 332) and is adapted to be fixed to different positions on the base (110, 210, 310) by the first movable fixing mechanism (132, 332), so as to be applied to the first tube portion (54) in different sizes and at different positions,
the first coupling device (130, 230, 330) comprises a first coupling member (134, 334) and a first driving unit (136, 336), wherein the first driving unit (136, 336) is adapted to drive the first coupling member (134, 334) to move linearly to be coupled to the first tube portion (54),
the first inspecting device (140, 340) comprises a camera, a grating or a laser range finder, and
the first correcting device (150, 250, 350) comprises at least one second driving unit (152a, 152b, 352a) and a first holding member (154, 354), wherein the first holding member (154, 354) is adapted to hold the first tube portion (54), and the at least one second driving unit (152a, 152b, 352a) is adapted to drive the first holding member (154, 354) to apply a force to the first tube portion (54).

3. The apparatus (100, 200) for automatically inspecting and automatically correcting the bicycle frame (50) according to claim 1, wherein
the second coupling device (160, 360) has a second movable fixing mechanism (162, 262) and is adapted to be fixed to different positions on the base (110, 210, 310) by the second movable fixing mechanism (162, 262), so as to be applied to the second tube portion (56) in different sizes and at different positions,
the second coupling device (160, 360) comprises at least one second coupling member (166a, 166b, 366a, 366b) and at least one third driving unit (164a, 164b, 164c, 364a, 364b), wherein the at least one third driving unit (164a, 164b, 164c, 364a, 364b) is adapted to drive the at least one second coupling member (166a, 166b, 366a, 366b) to move linearly to be coupled to the second tube portion (56),
the second inspecting device (170) comprises a camera, a grating or a laser range finder, and
the second correcting device (180) comprises at least one fourth driving unit (182, 382) and at least one second holding member (184), wherein the at least one second holding member (184) is adapted to hold the second tube portion (56), and the at least one fourth driving unit (182, 382) is adapted to drive the at least one second holding member (184) to apply a force to the second tube portion (56).

4. The apparatus (100, 200) for automatically inspecting and automatically correcting the bicycle frame (50) according to claim 1, wherein the end portion (52) is a five-way tube, the first tube portion (54) is a seat tube of the bicycle frame (50), and the second tube portion (56) is a head tube of the bicycle frame (50).

5. A method for automatically inspecting and automatically correcting a bicycle frame (50), comprising:
placing an end portion (52) of the bicycle frame (50) on a fixing device (120, 220);
driving a first coupling device (130, 230, 330) to be automatically coupled to a first tube portion (54) of the bicycle frame (50), thereby positioning the first tube portion (54) at a predetermined position;
automatically inspecting whether the first tube portion (54) has deflections along a first direction and a second direction relative to the end portion (52) by a first inspecting device (140, 340), so as to obtain an inspection value;
determining whether the inspection value obtained by the first inspecting device (140, 340) meets a predetermined value;
if the inspection value obtained by the first inspecting device (140, 340) does not meet the predetermined value, driving a first correcting device (150, 250, 350) to automatically apply a force to the first tube portion (54), thereby adjusting the inspection value of the first tube portion (54) relative to the end portion (52) to the predetermined value;
driving a second coupling device (160, 360) to be automatically coupled to a second tube portion (56) of the bicycle frame (50), thereby positioning the second tube portion (56) at another predetermined position;
automatically inspecting whether the second tube portion (56) has a deflection along the first direction relative to the first tube portion (54) by a second inspecting device (170), so as to obtain another inspection value;
determining whether the inspection value obtained by the second inspecting device (170) meets a predetermined value;
if the inspection value obtained by the second inspecting device (170) does not meet the predetermined value, driving a second correcting device (180) to automatically apply a force to the second tube portion (56), thereby adjusting the inspection value of the second tube portion (56) relative to the first tube portion (54) to the predetermined value.

6. The method for automatically inspecting and automatically correcting the bicycle frame (50) according to claim 5, further comprising:
fixing the first coupling device (130, 230, 330) to different positions relative to the first tube portion (54) by a first movable fixing mechanism (132, 332), so as to apply the first coupling device (130, 230, 330) to the first tube portion (54) in different sizes and at different positions,
wherein the step of driving the first coupling device (130, 230, 330) to be automatically coupled to the first tube portion (54) of the bicycle frame (50) comprises: driving the first coupling member (134, 334) to move linearly to be coupled to the first tube portion (54) by a first driving unit (136, 336).

7. The method for automatically inspecting and automatically correcting the bicycle frame (50) according to claim 5, further comprising:
after the first tube portion (54) is positioned at the predetermined position, and before the first tube portion (54) is automatically inspected by the first inspecting device (140, 340), fixing the end portion (52) by the fixing device (120, 220), and driving the first coupling device (130, 230, 330) to automatically release the first tube portion (54),
wherein the step of driving the first correcting device (150, 250, 350) to automatically apply the force to the first tube portion (54) comprises: holding the first tube portion (54) by a first holding member (154, 354), and driving the first holding member (154, 354) to apply a force to the first tube portion (54) by at least one second driving unit (152a, 152b, 352a).

8. The method for automatically inspecting and automatically correcting the bicycle frame (50) according to claim 5, wherein the step of driving the first correcting device (150, 250, 350) to automatically apply the force to the first tube portion (54) comprises:
adjusting the force applied to the first tube portion (54) by the first correcting device (150, 250, 350) according to first correction historical information stored in a database (190b).

9. The method for automatically inspecting and automatically correcting the bicycle frame (50) according to claim 8, wherein a step of establishing the first correction historical information comprises:
storing a plurality of forces applied to the first tube portion (54) by the first correcting device (150, 250, 350) and a plurality of corresponding correction results in the database (190b).

10. The method for automatically inspecting and automatically correcting the bicycle frame (50) according to claim 5, further comprising:
fixing the second coupling device (160, 360) to different positions relative to the second tube portion (56) by a second movable fixing mechanism (162, 262), so as to apply the second coupling device (160, 360) to the second tube portion (56) in different sizes and at different positions,
wherein the step of driving the second coupling device (160, 360) to be automatically coupled to the second tube portion (56) of the bicycle frame (50) comprises: driving at least one second coupling member (166a, 166b, 366a, 366b) to move linearly to be coupled to the second tube portion (56) by at least one third driving unit (164a, 164b, 164c, 364a, 364b).

11. The method for automatically inspecting and automatically correcting the bicycle frame (50) according to claim 10, further comprising:
before the second tube portion (56) is inspected by the second inspecting device (170), driving the second coupling device (160, 360) to automatically release the at least one second coupling member (166a, 166b, 366a, 366b),
wherein the step of inspecting the second tube portion (56) by the second inspecting device (170) comprises: automatically inspecting whether the at least one second coupling member (166a, 166b, 366a, 366b) coupled to the second tube portion (56) has a deflection along the first direction relative to the first tube portion (54) by the second inspecting device (170), thereby obtaining the inspection value of the second tube portion (56) relative to the first tube portion (54).

12. The method for automatically inspecting and automatically correcting the bicycle frame (50) according to claim 11, wherein the step of driving the second correcting device (180) to automatically apply the force to the second tube portion (56) comprises:
driving the second correcting device (180) to automatically apply the force to the at least one second coupling member (166a, 166b, 366a, 366b) coupled to the second tube portion (56), thereby applying the force to the second tube portion (56) through the at least one second coupling member (166a, 166b, 366a, 366b),
wherein the step of driving the second correcting device (180) to automatically apply the force to the second tube portion (56) comprises: holding the second tube portion (56) by at least one second holding member (184), and driving the at least one second holding member (184) to apply the force to the second tube portion (56) by at least one fourth driving unit (182, 382).

13. The method for automatically inspecting and automatically correcting the bicycle frame (50) according to claim 5, wherein the step of driving the second correcting device (180) to automatically apply the force to the second tube portion (56) comprises:
adjusting the force applied to the second tube portion (56) by the second correcting device (180) according to second correction historical information stored in a database (190b).

14. The method for automatically inspecting and automatically correcting the bicycle frame (50) according to claim 13, wherein a step of establishing the second correction historical information comprises:
storing a plurality of forces applied to the second tube portion (56) by the second correcting device (180) and a plurality of corresponding correction results in the database (190b).

15. The method for automatically inspecting and automatically correcting the bicycle frame (50) according to claim 5, wherein the end portion (52) is a five-way tube, the first tube portion (54) is a seat tube of the bicycle frame (50), and the second tube portion (56) is a head tube of the bicycle frame (50).
